# EUROPEAN PATENT APPLICATION

(11) **EP 1 988 466 A1**
(43) Date of publication of application: **05.11.2008**
(21) Application number: 06714614.2
(22) Date of filing: 24.02.2006
(51) Int. Cl.: G06F 12/08, G06F 12/12

(54) **CACHE MEMORY DEVICE AND CACHE MEMORY CONTROL METHOD**

(71) Applicant: FUJITSU LIMITED, Kawasaki-shi, Kanagawa 211-8588 (JP)
(72) Inventor: MIURA, Takashi, Kawasaki-shi, Kanagawa, 211-8588 (JP); KIYOTA, Naohiro, Kawasaki-shi, Kanagawa, 211-8588 (JP)
(74) Representative: Stebbing, Timothy Charles
(86) International application number: PCT/JP2006/303475
(87) International publication number: WO 2007/096998

(57) **Abstract**

To prevent a tag information error at a time of a replace process and to protect a system from damage. An error detection unit (104) performs error detection of tag information corresponding to an address of desired data for which a readout request is made. When no error is detected in the tag information, a search unit (107) searches the tag information for an address of the desired data. When a cache miss occurs, a way selection unit (108) selects a way least frequently used recently from the tag information, and outputs an address of data stored in the selected way to an address memory unit (110). When a cache miss occurs, a replace control unit (109) reads out an address from the address memory unit (110) and outputs to a secondary cache control unit (300) a replace request to replace data of the readout address with the desired data. The address memory unit (110) stores the address that is output from the way selection unit (108).

## Description

### TECHNICAL FIELD

The present invention relates to a cache memory device which includes a cache that stores data and tag information indicating an address specifying stored data and to a cache memory control method thereof, and in particular, to a cache memory device that is capable of preventing an error of tag information at a time of a replace process, and protecting a system from damage, and to a cache memory control method thereof.

### BACKGROUND ART

Conventionally, a cache memory installed inside a processor such as a CPU provides a high-speed access but has smaller storage capacity than a main memory. Thus, the cache memory cannot store all data stored in the main memory, and stores only a part of data stored in the main memory. Therefore, in order to allow for search on data of which address in the main memory is stored (cached) in the cache memory, the cache memory stores data and tag information indicating an address in the main memory.

When a writing and readout process of data occurs to the cache memory in the course of a CPU process, tag information is read out from the cache memory and a search is conducted to find whether desired data is cached in the cache memory or not. Here, in order to guarantee that no error occurs during the tag information readout, error detection is sometimes performed with the use of a parity bit added to the tag information.

The error detection may utilize an ECC (Error Correcting Code) and the like instead of the parity bit as described in Patent Document 1. Further, it is described in Patent Document 1 that, based on a ratio of main memory capacity to cache memory capacity, error detection in tag information is performed with the use of a parity bit or an ECC for improved reliability.

Patent Document 1: Japanese Patent Application Laid-Open No. 2000-20397

### DISCLOSURE OF INVENTION

### PROBLEM TO BE SOLVED BY THE INVENTION

When no error is detected in readout tag information as a result of error detection in tag information, the tag information is searched and it is checked whether desired data is stored in the cache memory or not. As a result, if the desired data is not stored in the cache memory (cache miss), a replace process is performed in which data currently stored in the cache memory is replaced by the desired data stored in a main memory or an upper cache memory (i.e., secondary cache or the like).

In the replace process, tag information is read out again from the cache memory and data to be replaced by the desired data is decided. When data to be replaced is decided, the data and tag information corresponding to the data are temporarily stored in a save-buffer, and the main memory or the upper cache memory is requested to replace data of an address indicated by the tag information with the desired data.

Here, the replace process is performed under the assumption that the tag information read out from the cache memory is correct. However, even if the tag information does not have an error at the time of the readout and writing processes, if an error occurs during the readout process of tag information at a time of the replace process, significant damage can be caused on a system.

The present invention is made in view of the above and it is an object of the present invention to provide a cache memory device and a cache memory control method which can prevent a tag information error at a time of a replace process and protect a system from damage.

### MEANS FOR SOLVING PROBLEM

In order to solve the above mentioned problems, the present invention is a cache memory device that includes a cache which stores data and tag information specifying an address of stored data, and includes a detection unit that detects an error by reading out the tag information when a writing/readout request of desired data occurs to the cache, a search unit that searches the tag information for an address of the desired data when no error is detected in the tag information as a result of error detection by the detection unit, a memory unit that stores an address of data that is to be replaced by the desired data, the address being contained in the tag information, when the address of the desired data is not contained in the tag information as a result of search by the search unit, and a control unit that requests an external unit to replace data with a use of the address stored by the memory unit.

Further, in the present invention, in an aspect of the present invention above, the memory unit includes a selection unit that selects an address of data least recently accessed from a plurality of addresses contained in the tag information, and the memory unit stores the address selected by the selection unit.

Further, in the present invention, in an aspect of the present invention above, the control unit reads out and invalidates data corresponding to an address stored by the memory unit.

Further, in the present invention, in an aspect of the present invention above, the control unit reads out data corresponding to an address stored by the memory unit, and transfers the data to an external unit.

Further, in the present invention, in an aspect of the present invention above, when a process other than data replacement is requested after an address is stored by the memory unit, the control unit compares an address of data to be processed with the address stored by the memory unit and cancels the process if the addresses are identical.

Further, the present invention, in an aspect of the present invention above, further includes an acquiring unit that acquires tag information where an error is detected and data corresponding to the tag information from an external unit when an error is detected in the tag information as a result of error detection by the detection unit, and a writing unit that writes tag information and data acquired by the acquiring unit, in the cache.

Further, the present invention, in an aspect of the present invention above, further includes a writing/readout unit that performs writing/readout of desired data stored in the cache when an address of desired data is contained in the tag information as a result of search by the search unit.

Further, the present invention is a cache memory control method that controls a cache which stores data and tag information specifying an address of stored data, and includes a detection step of detecting an error by reading out the tag information when a writing/readout request of desired data occurs to the cache, a search step of searching the tag information for an address of the desired data when no error is detected in the tag information as a result of error detection in the detection step, a storing process of storing an address of data that is to be replaced by the desired data, the address being contained in the tag information, when the address of the desired data is not contained in the tag information as a result of search in the search step, and a requesting step of requesting an external unit to replace data with a use of the address stored in the storing step.

### EFFECT OF THE INVENTION

According to the present invention, when a writing/readout request of desired data occurs to the cache, tag information is read out and an error therein is detected. When an error is not detected in the tag information as a result of the error detection, the tag information is searched for an address of the desired data. When the address of the desired data is not contained in the tag information as a result of the search, an address of data to be replaced by the desired data, the address being contained in the tag information, is stored, and data replacement is requested to an external unit with the use of the stored addresses. Therefore, the addresses used in the data replacement, that is, in the replace process are based on the tag information where no error is detected, whereby correctness of the tag information is guaranteed, a tag information error in the replace process is prevented, and as a result, a system is protected from damage.

Further, according to the present invention, as an address of data least recently accessed of a plurality of addresses in tag information is selected and the selected address is stored, data that is least likely to be accessed becomes data to be replaced, whereby cache efficiency can be enhanced.

Further, according to the present invention, data corresponding to a stored address is read out from the cache and invalidated, whereby data to be replaced is invalidated and cache capacity is secured, and the desired data can be newly stored in the cache.

Further, according to the present invention, as data corresponding to a stored address is read out from the cache and transferred to an external unit, data to be replaced can be transferred, for example, to the secondary cache or the main memory and cache capacity is secured, whereby the desired data can be newly stored in the cache.

Further, according to the present invention, when an address is stored and subsequently a process other than data replacement is requested, an address of data for the process is compared with a stored address, and the process is cancelled if both of the addresses are identical. Therefore, even if a storage process, for example, is requested on data that is to be invalidated or transferred as data to be replaced, the process is not executed in vain.

Further, according to the present invention, when an error is detected in tag information as a result of error detection, the tag information where the error is detected and data corresponding to the tag information are acquired from an external unit, and the acquired tag information and data are written into the cache. Therefore, the tag information is updated and an error reoccurrence is prevented.

Further, according to the present invention, when an address of desired data is contained in tag information as a result of a search, in order to perform a writing/readout of the desired data stored in the cache, a writing/readout of data is immediately performed if the desired data is stored in the cache, that is, if a cache hit occurs.

### BRIEF DESCRIPTION OF DRAWINGS

FIG. 1 is a block diagram of an overall configuration of a CPU according to an embodiment of the present invention;
FIG. 2 is a block diagram of a configuration of main parts of a primary cache control unit according to the embodiment;
FIG. 3 is a diagram for explaining a configuration of a primary cache according to the embodiment; and
FIG. 4 is a flowchart of a cache memory control operation according to the embodiment.

### EXPLANATIONS OF LETTERS OR NUMERALS

- 100: Primary cache control unit
- 101: Connection unit
- 102: Readout instruction unit
- 103: Writing/readout unit
- 104: Error detection unit
- 105: Error notification unit
- 106: Tag/data acquiring unit
- 107: Search unit
- 108: Way selection unit
- 109: Replace control unit
- 110: Address memory unit
- 111: Data memory unit
- 200: Primary cache
- 300: Secondary cache control unit
- 400: Secondary cache
- 500: Command processing unit
- 600: Operation processing unit
- 700: Main memory

### BEST MODE(S) FOR CARRYING OUT THE INVENTION

An embodiment of the present invention is described below in detail with reference to drawings. Here, though a case where a CPU includes a primary cache and a secondary cache is described as an example below, the present invention is applicable to a case where a CPU includes only a primary cache, a CPU includes a third cache memory or more, or other cases.

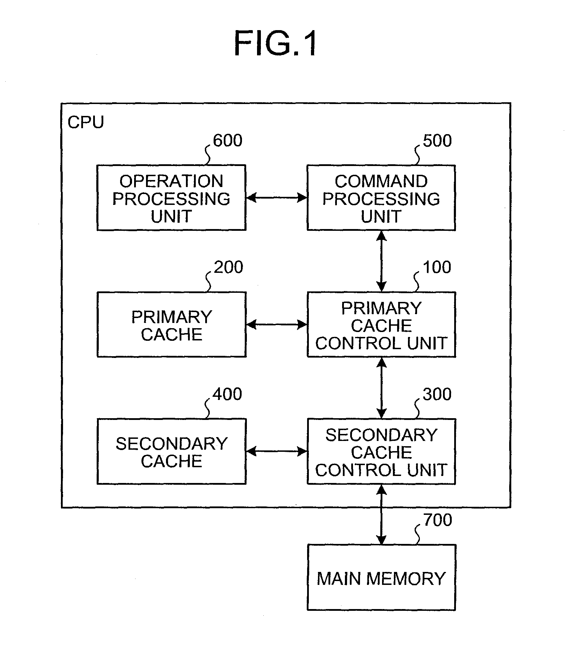

FIG. 1 is a block diagram of an overall configuration of a CPU including a cache memory device according to the embodiment of the present invention. The CPU shown in FIG. 1 includes a primary cache control unit 100, a primary cache 200, a secondary cache control unit 300, a secondary cache 400, a command processing unit 500, and an operation processing unit 600. Further, the CPU is connected to a main memory 700.

The primary cache control unit 100 performs readout and writing of data from/to the primary cache 200 according to a command from the command processing unit 500. Further, when desired data is not stored at a time of readout of data from the primary cache 200, the primary cache control unit 100 sends a replace request to the secondary cache control unit 300. At this time, the primary cache control unit 100 keeps tag information where an error has been detected at the time of readout of data from the primary cache 200, and performs a replace process based on the tag information. Specific operations of the primary cache control unit 100 are described in detail later.

The primary cache 200 stores therein frequently used data in the secondary cache 400 and the main memory 700, and also stores tag information indicating an address in the main memory 700 of stored data. In the present embodiment, the primary cache 200 adopts a set-associative scheme where a plurality of cache lines correspond to each predetermined memory block in the main memory 700. Cache lines corresponding to an identical memory block are referred to below as a way.

The secondary cache control unit 300 performs readout and writing of data from/to the secondary cache 400 based on a replace request from the primary cache control unit 100. Further, when error information indicating that an error is detected in tag information is output from the primary cache control unit 100, the secondary cache control unit 300 refers to a copy of tag information in the primary cache 200, reads out tag information where an error has occurred and data corresponding to the tag information from the secondary cache 400, and outputs the data and the tag information to the primary cache control unit 100.

The secondary cache 400 stores frequently used data of the main memory 700 and stores tag information of stored data and a copy of tag information of the primary cache 200.

The command processing unit 500 interprets a command such as a program, instructs the operation processing unit 600 to perform a necessary operation process, and instructs the primary cache control unit 100 to perform readout and writing of necessary data. The operation processing unit 600 performs an operation process with data read out from the primary cache 200 and the like, according to an instruction from the command processing unit 500.

The main memory 700 is a main memory device which stores data and programs needed for CPU processes. The main memory 700 provides a greater capacity and a lower-speed access than the primary cache 200 and the secondary cache 400.

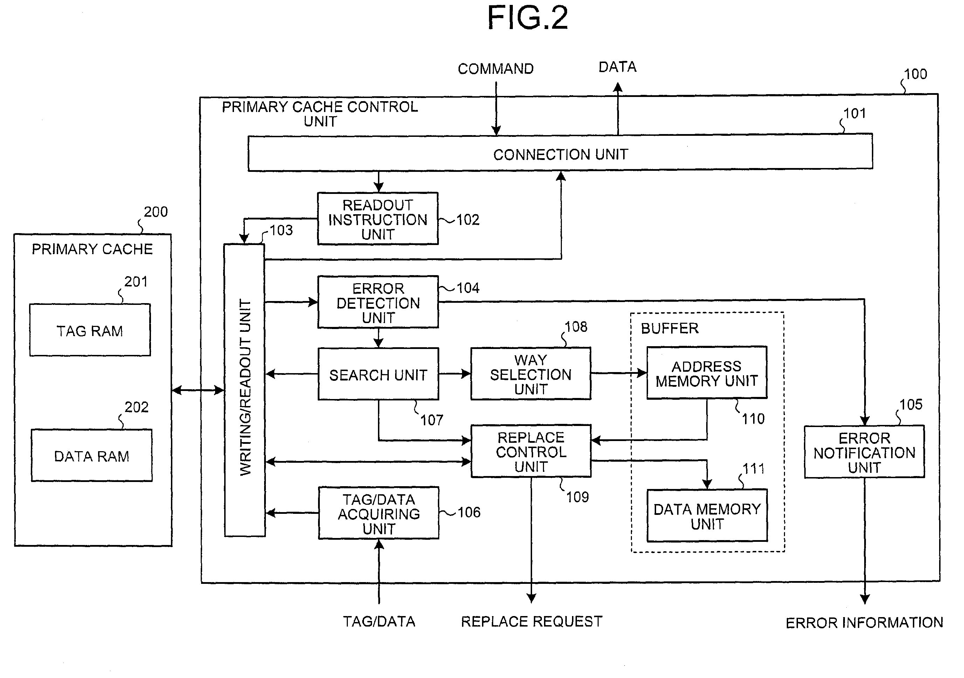

FIG. 2 is a block diagram of a configuration of main parts of the primary cache control unit 100 and the primary cache 200 according to the present embodiment. In FIG. 2, the primary cache control unit 100 includes a connection unit 101, a readout instruction unit 102, a writing/readout unit 103, an error detection unit 104, an error notification unit 105, a tag/data acquiring unit 106, a search unit 107, a way selection unit 108, a replace control unit 109, an address memory unit 110, and a data memory unit 111. Further, the primary cache 200 includes a tag RAM 201 and a data RAM 202.

The connection unit 101, which is connected with the command processing unit 500, notifies the readout instruction unit 102 of a data readout command from the command processing unit 500, and outputs data read out from the primary cache 200 to the command processing unit 500.

The readout instruction unit 102 gives an instruction notifying the writing/readout unit 103 of an address of data to read out when a data readout command is issued from the command processing unit 500.

When an instruction notifying of an address is given by the readout instruction unit 102, the writing/readout unit 103 reads out tag information corresponding to the address from the tag RAM 201, and outputs the tag information to the error detection unit 104. Further, when the writing/readout unit 103 is notified of a cache hit by the search unit 107, the writing/readout unit 103 reads out data corresponding to the address of the instruction of the readout instruction unit 102 from the data RAM 202, and outputs the data to the command processing unit 500 via the connection unit 101. Further, the writing/readout unit 103 writes tag information and data which are output from the tag/data acquiring unit 106 respectively in the tag RAM 201 and the data RAM 202. Further, the writing/readout unit 103 reads out data from the data RAM 202 based on control of the replace control unit 109.

The error detection unit 104 performs error detection in tag information that is output from the writing/readout unit 103. To be specific, the error detection unit 104 performs error detection with the use of a parity bit added to tag information. If an error is detected in the tag information, the error detection unit 104 notifies the error notification unit 105 of the error. If an error is not detected in the tag information, the error detection unit 104 notifies the search unit 107 of it and the tag information.

When an error is detected in the tag information, the error notification unit 105 outputs to the secondary cache control unit 300 error information that can specify the tag information where the error is detected, in order to update the tag information and data corresponding to the tag information.

The tag/data acquiring unit 106 acquires tag information and data which are output from the secondary cache control unit 300, and instructs the writing/readout unit 103 to write the acquired tag information and data into the primary cache 200.

When an error is not detected in the tag information, the search unit 107 searches the tag information for an address, for which the readout instruction unit 102 instructs the writing/readout unit 103 to perform readout. The tag information read out by the writing/readout unit 103 includes information of a plurality of ways corresponding to a same memory block, and thus includes data addresses which differ from way to way. Therefore, search of the tag information is needed to determine whether desired data is stored in the primary cache 200. As a result of the search, if an address of data to be read out is contained in the tag information, the case is a cache hit. If an address of data to be read out is not contained in the tag information, the case is a cache miss.

Then, on a cache hit, the search unit 107 notifies the writing/readout unit 103 of the cache hit to let the data read out from the data RAM 202 in the primary cache 200. On the other hand, on a cache miss, the search unit 107 outputs the tag information to the way selection unit 108 and notifies the replace control unit 109 of the cache miss.

The way selection unit 108 selects a recently least frequently used way from the tag information based on LRU (Least Recently Used) control, and outputs an address of data stored in the selected way to the address memory unit 110.

On a cache miss, the replace control unit 109 starts a replace process that replaces data stored in the data RAM 202 in the primary cache 200 with desired data stored in the secondary cache 400 or in the main memory 700. To be specific, when the replace control unit 109 is notified of a cache miss by the search unit 107, the replace control unit 109 reads out an address from the address memory unit 110, and outputs a replace request that requests for replacement of data of the readout address with desired data, to the secondary cache control unit 300.

Further, the replace control unit 109 instructs the writing/readout unit 103 to read out data of an address stored in the address memory unit 110 from the data RAM 202. Then, the replace control unit 109 outputs the data read out by the writing/readout unit 103 to the data memory unit 111.

The address memory unit 110 stores an address of data to be replaced by the desired data, the address being output from the way selection unit 108. It can be guaranteed that the stored address does not contain an error because the address memory unit 110 stores an address stored in a way which is selected from tag information where no error is detected as a result of error detection by the error detection unit 104.

The data memory unit 111 stores data that is output from the replace control unit 109 and is to be replaced by desired data. Further, although not shown in FIG. 2, the address memory unit 110 and the data memory unit 111 invalidate the stored address and data when an invalidation request on data to be replaced is sent from the secondary cache control unit 300.

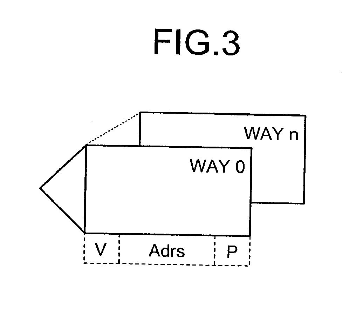

The tag RAM 201 stores tag information indicating an address in the main memory 700 of data stored in the primary cache 200. The data RAM 202 stores data corresponding to an address stored in the tag RAM 201. As mentioned above, in the present embodiment, the primary cache 200 adopts a set-associative scheme. Therefore, the tag RAM 201 and the data RAM 202 have, for example, a set of a plurality of ways 0 to n as shown in FIG. 3 corresponding to each memory block in the main memory 700. Each way in the tag RAM 201 stores an address of data stored in the data RAM 202 in the corresponding memory block. Each way in the data RAM 202 stores data itself in the corresponding memory block.

Also, as shown in FIG. 3, to each set formed by ways 0 to n, a valid bit V that indicates whether the set is valid or not, a system absolute address Adrs that corresponds to data or an address stored in each way, and a parity bit P for an error detection in the valid bit V and the system absolute address Adrs are added.

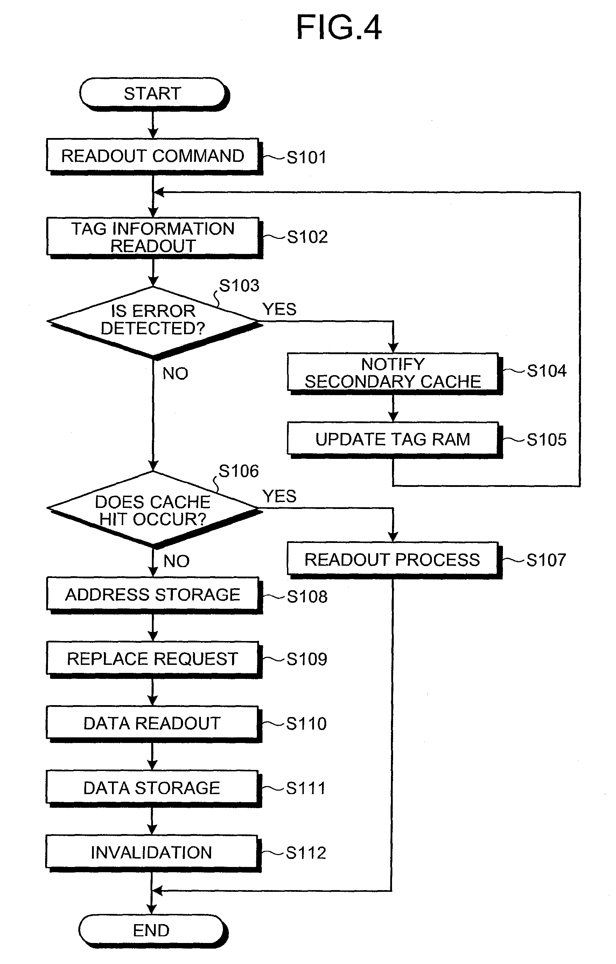

Next, a cache memory control method with the primary cache control unit 100 configured as above is described below with reference to the flowchart of FIG. 4.

Firstly, the command processing unit 500 issues a readout command to read out desired data from the primary cache 200, and the same reaches the connection unit 101 in the primary cache control unit 100 (Step S101). Then, the connection unit 101 outputs the readout command to the readout instruction unit 102, the readout instruction unit 102 notifies the writing/readout unit 103 of an address of desired data included in the readout instruction, and the writing/readout unit 103 reads out tag information corresponding to the address of the notification from the tag RAM 201 in the primary cache 200 (Step S102).

The readout tag information is output to the error detection unit 104. The error detection unit 104 utilizes a parity bit of the tag information and performs error detection of the tag information (Step S103). If an error is detected in the tag information as a result of the error detection (Step S103 Yes), the error notification unit 105 outputs error information to the secondary cache control unit 300 (Step S104). Then, the secondary cache control unit 300 refers to a copy of tag information in the primary cache 200, reads out data and tag information corresponding to the tag information where an error is detected based on the error information, and outputs the data and the tag information to the primary cache control unit 100. These data and tag information are acquired by the tag/data acquiring unit 106 in the primary cache control unit 100. The writing/readout unit 103 is instructed to write the data and the tag information respectively into the data RAM 202 and the tag RAM 201. Then, the writing/readout unit 103 writes the data and the tag information which contain no error respectively into the data RAM 202 and the tag RAM 201, and the tag RAM 201 is updated (Step S105).

On the other hand, if an error is not detected in the tag information as a result of the error detection in the tag information (Step S103 No), the tag information is output to the search unit 107, and the search unit 107 searches the tag information to determine whether the desired data is registered in the tag information or not (Step S106). As a result, if the desired data is registered in the tag information and a cache hit occurs (Step S106 Yes), a data readout process is performed since the data corresponding to the readout command from the command processing unit 500 is stored in the data RAM 202 (Step S107). That is, the search unit 107 instructs the writing/readout unit 103 to read out the desired data, the writing/readout unit 103 reads out the desired data from the data RAM 202 and outputs the data to the command processing unit 500 via the connection unit 101.

If the desired data is not registered in the tag information and a cache miss occurs as a result of the search of the tag information by the search unit 107 (Step S106 No), the tag information is output to the way selection unit 108 and the replace control unit 109 is notified of the cache miss. Then the way selection unit 108 selects a least recently used way from a plurality of ways in the tag information (i.e., LRU control is performed). The way is least frequently accessed recently, and thus becomes a way to be replaced by the desired data to be accessed this time. Therefore, an address stored in the way selected by the way selection unit 108 is stored in the address memory unit 110 (Step S108). Here, the address stored in the address memory unit 110 is acquired from tag information where no error is detected as a result of error detection by the error detection unit 104. Hence, the address is guaranteed to be correct.

Then, the replace control unit 109 that is notified of the cache miss reads out an address stored in the address memory unit 110, and sends to the secondary cache control unit 300 a replace request that requests replacing, in the primary cache 200, data of the readout address with the desired data (Step S109).

Further, the replace control unit 109 instructs the writing/readout unit 103 to read out data of the address read out from the address memory unit 110, and the data is read out from the data RAM 202 by the writing/reading unit 103 as data to be replaced (Step S110), then the data is output to the data memory unit 111 from the replace control unit 109, and is stored therein (Step S111).

In such a replace process, in the present embodiment, the correctness of the address stored in the address memory unit 110 is guaranteed as described above. Thus, in the replace process, it is not necessary to read out tag information from the tag RAM 201 again and perform error detection, and an error does not occur in the tag information (i.e., address) used in the replace process.

Further, at a time of data readout from the data RAM 202, LRU control can be used to determine which way to store the data to be replaced. However, as ways in the tag RAM 201 correspond to ways in the data RAM 202, the same way as the way in way selection for tag information is selected. As a result, a way that stores data of an address stored in the address memory unit 110 is selected.

Thereafter, when the secondary cache control unit 300 receiving a replace request issues a data invalidation request on data to be replaced, the replace control unit 109 invalidates an address stored in the address memory unit 110 and data stored in the data memory unit 111 (Step S112), and stores the desired data and tag information which are output from the secondary cache control unit 300 respectively in the data RAM 202 and the tag RAM 201, and then the replace process is finished. When the desired data requested by the replace request is not stored in the secondary cache 400, the secondary cache control unit 300 acquires the desired data from the main memory 700, and outputs the data to the primary cache control unit 100. Further, when a move-out request is issued from the secondary cache control unit 300 instead of an invalidation request, the replace control unit 109 may move out an address stored in the address memory unit 110 and data stored in the data memory unit 111 to the secondary cache control unit 300.

As described above, in the present embodiment, when error detection in tag information is performed at a time of readout of the tag information according to a data readout command, no error is detected in the tag information, and a cache miss occurs, then, an address stored in the tag information where no error is detected is temporarily kept for a replace process which follows a cache miss. Thus, correctness of the tag information (i.e., address) used for the replace process can be guaranteed, an error in the tag information at the time of the replace process can be prevented, and a system can be protected from damage.

In the embodiment above, when a storage process, for example, is performed after an address is stored in the address memory unit 110 and before a replace process starts, an address of data to be stored is compared with the address stored in the address memory unit 110. When the addresses are identical, which means that the storage process will be performed on the data to be invalidated or moved out by the replace, and therefore, an execution of the storage process may be cancelled.

### INDUSTRIAL APPLICABILITY

The present invention can be applied to prevent a tag information error at a time of a replace process, and to protect a system from damage.

## Claims

1. A cache memory device that includes a cache which stores data and tag information specifying an address of stored data, comprising:
a detection unit that detects an error by reading out the tag information when a writing/readout request of desired data occurs to the cache;
a search unit that searches the tag information for an address of the desired data when no error is detected in the tag information as a result of error detection by the detection unit;
a memory unit that stores an address of data that is to be replaced by the desired data, the address being contained in the tag information, when the address of the desired data is not contained in the tag information as a result of search by the search unit; and
a control unit that requests an external unit to replace data with a use of the address stored by the memory unit.

2. The cache memory device according to claim 1, wherein
the memory unit includes a selection unit that selects an address of data least recently accessed from a plurality of addresses contained in the tag information, and the memory unit stores the address selected by the selection unit.

3. The cache memory device according to claim 1, wherein
the control unit reads out and invalidates data corresponding to an address stored by the memory unit.

4. The cache memory device according to claim 1, wherein
the control unit reads out data corresponding to an address stored by the memory unit, and transfers the data to an external unit.

5. The cache memory device according to claim 1, wherein
when a process other than data replacement is requested after an address is stored by the memory unit, the control unit compares an address of data to be processed with the address stored by the memory unit and cancels the process if the addresses are identical.

6. The cache memory device according to claim 1 further comprising
an acquiring unit that acquires tag information where an error is detected and data corresponding to the tag information from an external unit when an error is detected in the tag information as a result of error detection by the detection unit, and
a writing unit that writes tag information and data acquired by the acquiring unit, in the cache.

7. The cache memory device according to claim 1 further comprising a writing/readout unit that performs writing/readout of desired data stored in the cache when an address of desired data is contained in the tag information as a result of search by the search unit.

8. A cache memory control method that controls a cache which stores data and tag information specifying an address of stored data, comprising:
a detection step of detecting an error by reading out the tag information when a writing/readout request of desired data occurs to the cache;
a search step of searching the tag information for an address of the desired data when no error is detected in the tag information as a result of error detection in the detection step;
a storing step of storing an address of data that is to be replaced by the desired data, the address being contained in the tag information, when the address of the desired data is not contained in the tag information as a result of search in the search step; and
a requesting step of requesting an external unit to replace data with a use of the address stored in the storing step.
